# FASCICULE DE BREVET EUROPEEN

(11) **EP 2 576 332 B1**
(45) Date de publication et mention de la délivrance du brevet: **25.06.2014**
(21) Numéro de dépôt: 11716435.0
(22) Date de dépôt: 14.03.2011
(51) Int. Cl.: B63B 27/24, F16L 29/04

(54) **INSTALLATION DE TRANSFERT DE FLUIDE ENTRE DEUX BÂTIMENTS**
INSTALLATION ZUM TRANSPORT EINER FLÜSSIGKEIT ZWISCHEN ZWEI SCHIFFEN
INSTALLATION FOR TRANSFERRING FLUID BETWEEN TWO SHIPS

(30) Priorité: 09.04.2010 FR 1001499
(43) Date de publication de la demande: 10.04.2013
(73) Titulaire: KSB S.A.S, 92635 Gennevilliers Cedex (FR)
(72) Inventeur: EYQUEM, Sébastien, 33000 Bordeaux (FR)
(74) Mandataire: Eidelsberg, Olivier Nathan
(86) Numéro de dépôt international: PCT/FR2011/000134
(87) Numéro de publication internationale: WO 2011/124775

(56) Documents cités:
- WO-A1-01/34460
- WO-A1-01/87703
- WO-A1-03/037704
- WO-A1-03/078244
- WO-A2-2009/071591
- GB-A- 2 184 090

## Description

La présente invention se rapporte aux installations de transfert de fluide et notamment de gaz liquéfié, comprenant une canalisation ayant une partie flexible aérienne, en caténaire, mettant en communication un bâtiment de navigation avec un autre bâtiment. Le bâtiment de navigation est souvent un méthanier, tandis que l'autre bâtiment est souvent un terminal flottant. La canalisation comporte les deux embouts d'un connecteur-déconnecteur, pourvu de moyens d'approche et de guidage à élément mâle et à élément femelle, et regroupant en une seule interface les dispositifs de connexion-déconnexion de service (communément appelé QC/DC) et de déconnexion d'urgence (communément appelé ERS) actionnés par une centrale hydraulique. Chaque embout comprend en son extrémité un robinet manoeuvré par un actionneur.

On trouve une installation de ce genre dans le WO 2009/071591. Il existe des risques d'incendie, notamment à la déconnexion d'installations de ce genre. L'invention vise à mieux les prévenir.

Suivant l'invention, il y a une seule bride isolante du point de vue électrique, qui est montée sur la canalisation entre le connecteur-déconnecteur et un premier des bâtiments, alors que sur le second des bâtiments se trouve une même centrale hydraulique qui alimente l'ensemble des dispositifs du connecteur-déconnecteur, notamment les modules de connexion-déconnexion (fonctions QC/DC et ERC) et les trois robinets. Une centrale hydraulique se trouvant sur le second bâtiment alimente un treuil de connexion-déconnexion. L'élément mâle du système de guidage est supporté par l'embout se trouvant du côté du premier des bâtiments et l'élément femelle par l'embout se trouvant du côté du second des bâtiments.

Ce système de transfert de gaz liquéfié évite tout risque d'explosion, qui peut être initiée en présence de trois facteurs : l'oxygène, une fuite de gaz et une amorce d'étincelles. Une fuite de gaz étant possible, notamment suite à une déconnexion d'urgence, toute amorce d'étincelles doit être empêchée. Or, la présence de courants électrostatiques et vagabonds générés séparément sur chaque bâtiment entraîne une différence de potentiel électrique entre eux. Une ligne de transfert étant le chemin le moins résistant au passage du courant, un dispositif d'isolation électrique entre ces deux bâtiments est indispensable pour éviter les étincelles au niveau de l'interface entre les deux embouts du connecteur. L'invention y pourvoit d'une manière très simple, en assurant l'alimentation de toute l'installation hydraulique par des centrales hydrauliques se trouvant sur un seul des deux bâtiments.

Ainsi, contrairement aux installations existantes, aucun flexible hydraulique (dont l'armature est généralement métallique et donc conductrice électriquement) ne transite au niveau d'une bride isolante, ce qui évite d'isoler indépendamment chacun d'eux. Les câbles électriques relatifs à l'instrumentation embarquée sur le système de transfert ne pouvant court-circuiter cette bride isolante si l'ensemble de l'installation est en sécurité intrinsèque, les deux bâtiments peuvent donc être directement informés de l'état de leur matériel respectif sans communication intermédiaire avec l'autre bâtiment.

Il peut y avoir plusieurs canalisations parallèles.

Le premier bâtiment, sur lequel est disposée la bride isolante d'un point de vue électrique, n'a pas la possibilité de commander le ou les deux robinets à papillon faisant partie de son propre matériel, étant donné que l'unique source d'alimentation hydraulique de l'ensemble des dispositifs du connecteur-déconnecteur se situe sur le second bâtiment. Cela est rendu possible par le fait que ces robinets à papillon soient par défaut en position fermée (avant une connexion et avant une déconnexion) et possèdent un système de maintien en fermeture soit par moyen mécanique, tel qu'un ressort de rappel au niveau de l'actionneur, soit par un accumulateur hydraulique embarqué. Comme explicité précédemment, le premier bâtiment sera bien entendu informé, grâce à l'instrumentation embarquée, de l'état de son matériel. Un écran de suivi des séquences commun aux deux bâtiments permet au personnel de ces bâtiments d'être informé de l'état des dispositifs importants et du déroulement des séquences lors d'un transfert, grâce au câble électrique disposé entre les deux bâtiments ou des moyens de communication radio. Il sera tout de même prévu des raccords hydrauliques par pompes à main sur les actionneurs de ces robinets afin que le premier bâtiment ait la possibilité de les manoeuvrer en-dehors d'un transfert, notamment en cas de maintenance.

Dans un mode de réalisation préféré, chaque actionneur de robinet d'isolement situé à l'extrémité de chaque embout du connecteur-déconnecteur est actionné par son propre moyen mécanique, ces moyens mécaniques sont accouplés mécaniquement et l'un d'eux est actionné par l'alimentation provenant de la centrale hydraulique. La synchronisation de ces deux robinets en ouverture et en fermeture, nécessaire de par leur agencement, est ainsi particulièrement bien assurée. Chaque actionneur peut comprendre à cet effet un pignon solidaire d'un arbre d'entraînement en rotation du papillon du robinet et chaque moyen mécanique peut comprendre un vérin à piston-crémaillère engrenant dans le pignon, l'un des pistons-crémaillères étant alimenté en fluide hydraulique et étant en contact avec l'autre piston crémaillère, de manière à lui transmettre son déplacement en sortie de tige.

Les carters de ces actionneurs sont seulement en contact plan sur plan, une force n'est donc pas nécessaire pour les séparer. De préférence, les deux pistons-crémaillères sont dans un carter commun en deux parties pouvant se séparer entre les faces en contact l'une avec l'autre des deux pistons-crémaillères suivant l'axe des embouts lors d'une déconnexion. Lors d'une déconnexion, le carter se sépare en deux parties en laissant à découvert des emplacements des compartiments intérieurs du carter, qui ne sont pas en communication avec l'alimentation hydraulique.

Ce dispositif d'actionnement pourvu d'un système de rappel en fermeture par ressort mécanique ou par accumulateur hydraulique permet de pallier une éventuelle défaillance de l'alimentation provenant de la centrale hydraulique de manière à pouvoir assurer dans tous les cas la fermeture des robinets, qui constitue une étape indispensable avant une déconnexion d'urgence, afin d'isoler les deux canalisations ainsi séparées, ce qui permet d'empêcher les pertes de fluide.

Dans le cas où la centrale hydraulique alimentant les dispositifs du connecteur-déconnecteur est située sur le méthanier (bâtiment de navigation), il est prévu un coupleur-découpleur sur l'alimentation hydraulique monté de manière à se coupler, lors de la connexion de service, et à se désaccoupler sans perte de fluide hydraulique, lors d'une déconnexion du connecteur-déconnecteur, par l'effet de la force dirigée suivant son axe, qui est parallèle à celui des embouts, permettant l'alimentation d'un troisième robinet d'isolation.

Aux dessins annexés, donnés uniquement à titre d'exemple :
- la Figure 1: est une vue schématique d'une installation de transfert de fluide suivant l'invention ;
- la Figure 2: est une vue schématique d'une installation de transfert suivant l'invention, dans laquelle la bride isolante est située entre l'extrémité du flexible aérien et l'embout du connecteur-déconnecteur ;
- la Figure 3: est une vue schématique d'une installation de transfert suivant l'invention, dans laquelle la bride isolante est située côté méthanier au niveau de la pièce d'adaptation de l'embout du connecteur-déconnecteur sur le manifold ;
- la Figure 4: illustre un exemple de couplage mécanique pour l'actionnement de deux robinets couplés.

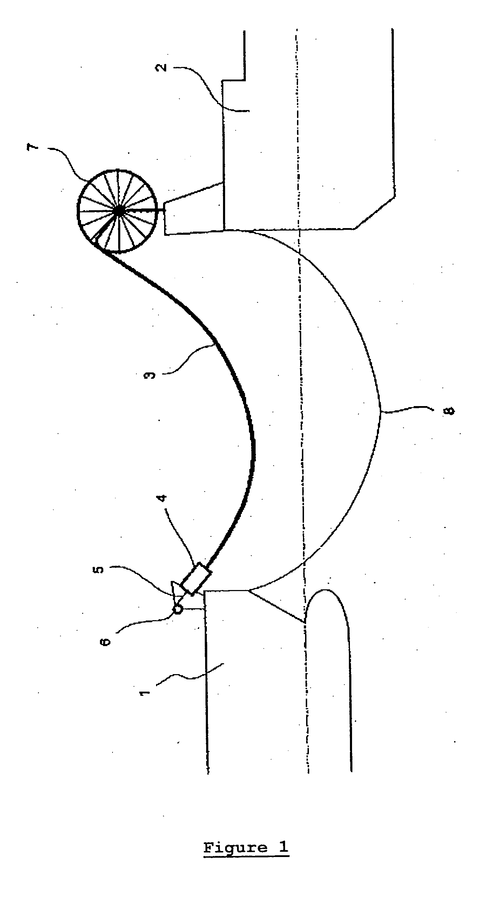

L'installation de transfert de gaz naturel liquéfié entre un méthanier 1 et un terminal flottant 2, qui peut être un poste de déchargement ou un poste de chargement lui-même relié au réseau gaz par des tuyauteries situées sous la mer, comprend une ou plusieurs canalisations 3 flexibles cryogéniques de communication entre les cuves des deux bâtiments 1, 2. Le flexible 3 cryogénique aérien en caténaire est déployé et enroulé à l'aide d'une roue 7 et d'un treuil 6 de connexion-déconnexion, positionné par exemple sur le méthanier 1, treuil qui, par l'intermédiaire de son câble 5 de connexion-déconnexion fixé à l'extrémité d'un connecteur-déconnecteur 4, permet le rapprochement ou l'éloignement de ce dernier par rapport au méthanier 1. La Figure 1 présente le système de transfert en position connectée, le connecteur-déconnecteur 4 assurant la liaison entre les cuves des deux bâtiments 1, 2. Les deux bâtiments 1, 2 devant communiquer sur l'état de leur matériel afin d'assurer un bon déroulement des différentes manoeuvres lors d'un transfert, un câble de communication 8, de préférence sous-marin, est déployé entre ces deux bâtiments. Il pourra être utilisé en secours, si les bateaux disposent de moyens de communication radio.

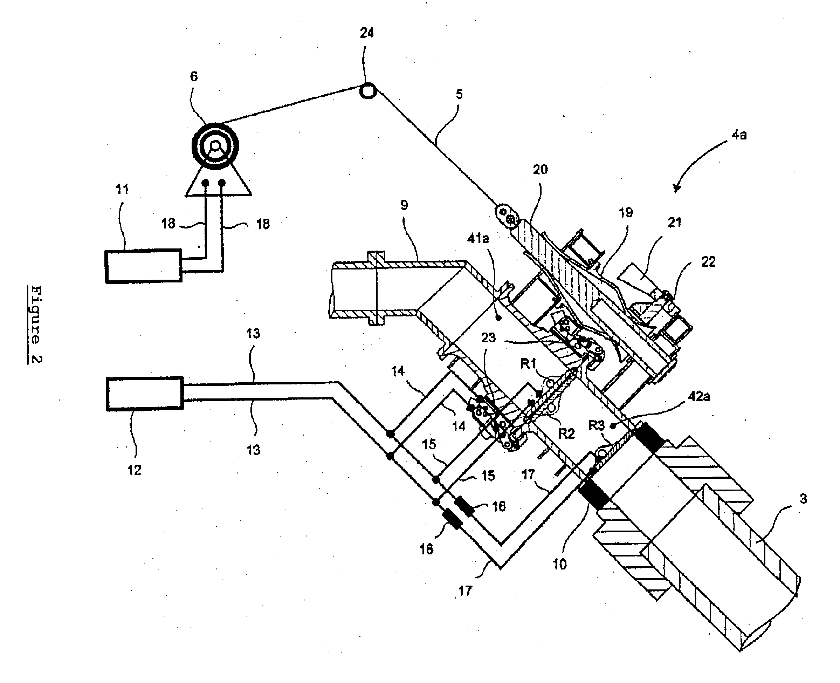

A la Figure 2, les centrales hydrauliques 11, 12 sont positionnées sur le méthanier 1, tandis que la bride 10 isolante se situe du côté du terminal 2 entre l'extrémité du flexible aérien 3 et un embout 42a du connecteur-déconnecteur 4a, dont l'autre embout 41a est relié au manifold du méthanier 1 par l'intermédiaire d'une pièce d'adaptation 9. L'alimentation provenant de la centrale hydraulique 11 permet par des conduits hydrauliques 18 d'alimenter le treuil 6 de connexion-déconnexion, dont le câble 5 de connexion-déconnexion est accroché à l'extrémité d'un élément de guidage mâle 20 par l'intermédiaire d'une poulie de renvoi 24, ce qui permet l'approche et l'éloignement des deux embouts 41a, 42a du connecteur-déconnecteur 4a. L'alimentation provenant de la centrale hydraulique 12 permet, par des conduits hydrauliques 13, d'alimenter respectivement, par des dérivations 14, des modules de connexion-déconnexion 23 fixés sur l'embout 41a et au moins au nombre de trois, par des dérivations 15, l'actionneur d'un robinet R1 à papillon se trouvant à l'extrémité de l'embout 41a, qui agit, par exemple par contact mécanique, sur l'actionneur d'un robinet R2 à papillon se trouvant à l'extrémité de l'embout 42a au niveau de l'interface avec l'embout 41a, et par des dérivations 17 l'actionneur d'un robinet R3 à papillon se trouvant à l'autre extrémité de l'embout 42a, par l'intermédiaire de coupleurs-découpleurs hydrauliques 16, qui se connectent lors d'une connexion de service et se déconnectent lors d'une déconnexion du connecteur-déconnecteur 4a par l'application d'une force parallèle à l'axe des embouts. Ce robinet R3 à papillon permet d'assurer une deuxième barrière d'étanchéité à l'extrémité du flexible cryogénique aérien 3 suite à une déconnexion du connecteur-déconnecteur 4a, et il est manoeuvré par un actionneur hydraulique indépendant, une parfaite synchronisation de manoeuvre avec les deux autres robinets R1, R2 n'étant pas nécessaire.

Un élément de guidage femelle 19, supporté par l'embout 41a, reçoit l'élément de guidage mâle 20, supporté par l'embout 42a. Un galet de guidage 22, supporté par l'embout 41a, entre également en liaison avec une fourche de guidage 21, supportée par l'embout 42a. La coopération de ces éléments permet de guider les deux embouts 41a, 42a du connecteur-déconnecteur 4a et d'assurer leur bon positionnement lors d'une connexion.

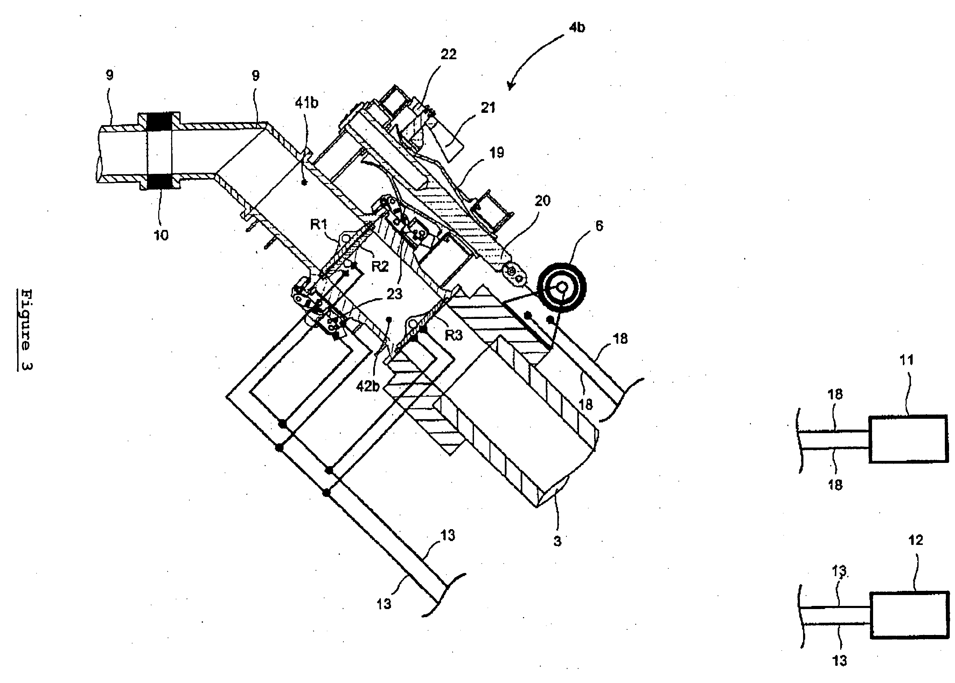

A la Figure 3, les centrales hydrauliques 11, 12 sont positionnées sur le terminal flottant 2 et la bride 10 isolante du point de vue électrique du côté du méthanier 1 au niveau de la pièce d'adaptation 9 de l'embout 41b du connecteur-déconnecteur 4b sur le manifold. Cette fois-ci, l'élément de guidage femelle 19 comme le galet de guidage 22 sont supportés par l'embout 42b, alors que l'élément de guidage mâle 20 comme la fourche de guidage 21 sont supportés par l'embout 41b, cela permettant d'embarquer à l'extrémité du flexible cryogénique aérien 3 le treuil 6 de connexion-déconnexion ainsi directement alimenté hydrauliquement par la centrale hydraulique 11 par l'intermédiaire des flexibles hydrauliques 18 disposés le long du flexible cryogénique aérien 3. L'alimentation provenant de la centrale hydraulique 12 permet d'alimenter directement, par l'intermédiaire des flexibles hydrauliques 13 disposés le long du flexible aérien cryogénique 3, les robinets R2, R3 disposés à chaque extrémité de l'embout 42b, ainsi que les modules de connexion-déconnexion 23 disposés cette fois-ci sur l'embout 42b. Le robinet R1, qui ferme l'embout 41b, est donc dans ce cas manoeuvré indirectement par l'actionneur du robinet R2, par exemple par contact mécanique, qui est alimenté par la centrale hydraulique 12.

La solution présentée en Figure 2 a l'avantage d'optimiser la masse de l'embout (42a) fixé à l'extrémité du flexible cryogénique (3). Mais un treuil de connexion-déconnexion (6) ainsi que les centrales hydrauliques (11, 12) doivent être installés sur les méthaniers (1).

La solution présentée en Figure 3 a l'inconvénient d'avoir une masse non négligeable embarquée à l'extrémité du flexible cryogénique (3), notamment de par l'installation du treuil de connexion-déconnexion (6). Les méthaniers (1) n'ont cependant besoin d'aucun équipement spécifique, hormis la bride isolante (10) et l'embout (41b) du connecteur-déconnecteur (4b).

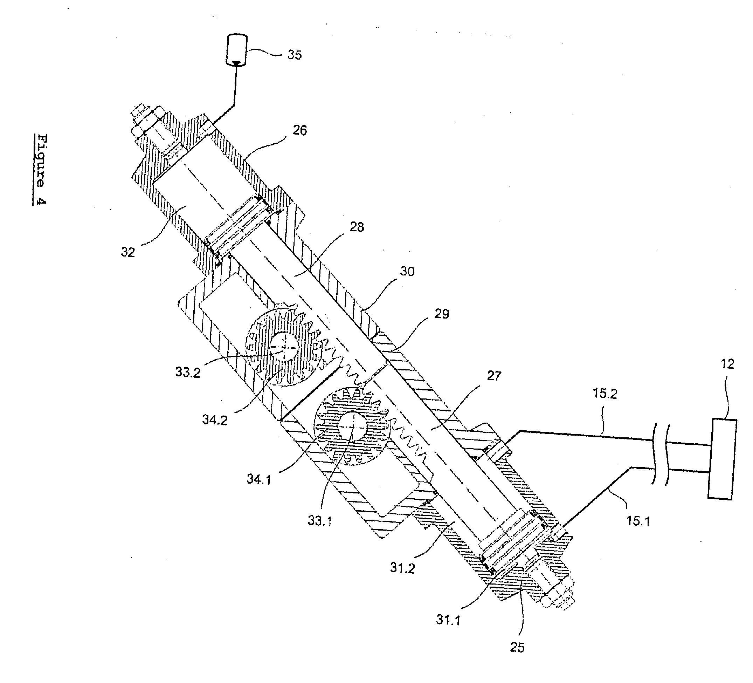

La Figure 4 présente une solution de couplage mécanique entre les actionneurs à vérin hydraulique des robinets R1, R2 de type papillon dans les installations du type de la Figure 2 ou de la Figure 3. Leur représentation correspond à la position fermée de ces robinets à papillon. Ce couplage permet d'assurer la manoeuvre simultanée des deux robinets à papillon et d'assurer la fermeture des vannes, qui fait notamment partie des opérations de sécurité, même en cas de défaut au niveau de l'alimentation hydraulique principale.

La translation du piston-crémaillère 28 permet la rotation du pignon 34.2 solidaire de l'arbre 33.2 manoeuvrant le robinet d'isolement R1 ou R2, qui n'est pas alimenté hydrauliquement par l'alimentation provenant d'une centrale hydraulique 12 (suivant que l'on se trouve dans le cas de la Figure 2 ou de la Figure 3). La translation du piston-crémaillère 27 permet la rotation du pignon 34.1 solidaire de l'arbre 33.1 manoeuvrant l'autre robinet d'isolement parmi les robinets R1, R2, qui est directement alimenté hydrauliquement par la centrale hydraulique 12.

Lorsque les deux parties du connecteur sont accouplées à la suite d'une connexion de service (robinets à papillon fermés), les demi carters 29, 30 sont positionnés de manière à ce que le piston-crémaillère 27, initialement en position rentrée, permette d'entraîner par contact mécanique le piston-crémaillère 28, initialement en position sortie. L'ouverture desdits robinets à papillon est donc réalisée par l'alimentation hydraulique de la chambre 31.1 du corps de vérin 25 par l'intermédiaire du flexible hydraulique 15.1 relié à la centrale hydraulique 12, ce qui permet de recharger en huile l'accumulateur 35 relié à la chambre 32 du corps de vérin 26. La fermeture desdits robinets à papillon est réalisée grâce à l'alimentation hydraulique de la chambre 31.2 du corps de vérin 25 par l'intermédiaire du flexible hydraulique 15.2 relié à la centrale hydraulique 12, ce qui entraîne une chute de pression dans la chambre 32 du corps de vérin 26 permettant de décharger l'accumulateur 35 provoquant le déplacement du piston-crémaillère 28 de manière coordonnée avec le piston-crémaillère 27.

En cas de défaut de l'alimentation principale provenant de la centrale hydraulique 12, l'accumulateur 35 a des pressions mini et maxi de travail choisies de manière à vaincre le couple de fermeture des deux robinets. Il peut éventuellement être remplacé par un ressort mécanique positionné dans la chambre 32 du corps de vérin 26. D'autre part, la chambre 31.2 du corps de vérin 25 peut également être alimentée, non pas par l'alimentation hydraulique principale provenant de la centrale hydraulique 12, mais par un accumulateur hydraulique relié à celle-ci, le positionnement d'un ressort mécanique dans la chambre 31.2 pouvant également réaliser cette même fonction.

Lors d'une déconnexion, les deux demi carters 29, 30 se séparent suivant l'axe des embouts du connecteur-déconnecteur 4.

## Revendications

1. Installation de transfert de fluide comprenant une canalisation (3, 4, 9) ayant une partie (3) flexible aérienne, en caténaire, mettant en communication un bâtiment (1) de navigation avec un autre bâtiment (2), la canalisation (3) comportant les deux embouts (41, 42) d'un connecteur-déconnecteur (4), pourvu de moyens (19 à 22) d'approche et de guidage à élément mâle (20) et à élément femelle (19), et regroupant en une seule interface les dispositifs de connexion-déconnexion de service, communément appelé QC/DC, et de déconnexion d'urgence, communément appelé ERS, actionnés par une centrale hydraulique (12), chaque embout (41, 42) comprenant en son extrémité un robinet (R1, R2) manoeuvré par un actionneur, **caractérisée en ce que**
- il y a une seule bride (10) isolante du point de vue électrique, qui est montée sur la canalisation (3, 4, 9) entre le connecteur-déconnecteur (4) et un premier des bâtiments,
- une même centrale hydraulique (12) se trouvant sur le second des bâtiments alimente le connecteur-déconnecteur (4) et les deux robinets (R1, R2, R3),
- une centrale hydraulique (11) se trouvant sur le second bâtiment alimente un treuil (6) de connexion-déconnexion, et
- l'élément de guidage mâle (20) est supporté par l'embout se trouvant du côté du premier des bâtiments et l'élément de guidage femelle (19) par l'embout se trouvant du côté du second des bâtiments.

2. Installation suivant la revendication 1, **caractérisée en ce que** chaque arbre de manoeuvre (33.1, 33.2) des robinets (R1, R2) d'isolement situés à l'extrémité de chaque embout (41, 42) du connecteur-déconnecteur (4) est actionné par son propre moyen (27, 28) mécanique, ces moyens mécaniques d'actionnement des deux actionneurs sont accouplés mécaniquement et l'un d'eux est actionné par l'alimentation provenant de la centrale hydraulique (12).

3. Installation suivant la revendication 2, **caractérisée en ce que** chaque actionneur comprend un pignon (34.1, 34.2) solidaire d'un arbre (33.1, 33.2) d'entraînement en rotation du papillon du robinet (R1, R2) et chaque moyen mécanique comprend un piston-crémaillère (27, 28) engrenant dans le pignon (34.1, 34.2), l'un des pistons-crémaillères étant alimenté par la centrale hydraulique (12) et étant en contact avec l'autre piston-crémaillère, de manière à lui transmettre son déplacement.

4. Installation suivant la revendication 3, **caractérisée en ce que** les deux pistons-crémaillères (27, 28) sont dans un carter en deux parties (29, 30) pouvant se séparer entre les faces en contact l'une avec l'autre des deux pistons-crémaillères, suivant l'axe des embouts (41, 42) lors d'une déconnexion.

5. Installation suivant l'une des revendications précédentes, dans laquelle la centrale hydraulique (12) alimentant le connecteur-déconnecteur (4) est sur le bâtiment (1) de navigation, **caractérisée par** un coupleur-découpleur (16) sur l'alimentation hydraulique, monté de manière à se coupler lors de la connexion de service et à se désaccoupler sans perte de fluide hydraulique lors d'une déconnexion du connecteur-déconnecteur (4) par l'effet de la force dirigée suivant son axe, qui est parallèle à celui des embouts, permettant l'alimentation d'un troisième robinet (R3) d'isolation.

6. Installation suivant l'une des revendications précédentes, **caractérisée en ce que** les robinets peuvent se fermer, même en cas de défaut d'alimentation provenant de la centrale hydraulique (12), grâce à un accumulateur hydraulique (35) ou à un ressort mécanique de rappel porté par l'actionneur manoeuvrant le robinet situé sur l'embout non alimenté hydrauliquement.

7. Installation suivant l'une des revendications précédentes, comprenant un câble électrique ou des moyens de communication radio entre les bâtiments.

## Patentansprüche

1. Einrichtung zum Transport von Fluid, umfassend eine Rohrleitung (3, 4, 9) mit einem oberirdischen, kettenlinienförmigen flexiblen Teil (3), der ein Schiffsbau (1) mit einem weiteren Bau (2) verbindet, wobei die Rohrleitung (3) die beiden Anschlussstücke (41, 42) einer Verbindungs-/Trennvorrichtung (4), die mit Annäherungs- und Führungsmitteln (19 bis 22) mit männlichem Element (20) und mit weiblichem Element (19) versehen ist, umfasst und an einer einzigen Schnittstelle die Vorrichtungen zur Betriebsverbindung/-abschaltung, allgemein als QC/DC bezeichnet, sowie zur Notfallabschaltung, allgemein als ERS bezeichnet, vereint, die über eine Hydraulikzentrale (12) betätigt werden, wobei jedes Anschlussstück (41, 42) an seinem Ende ein durch einen Aktor betätigtes Ventil (R1, R2) umfasst,
**dadurch gekennzeichnet, dass**
- es einen einzigen unter elektrischem Gesichtspunkt isolierenden Flansch (10) gibt, der an der Rohrleitung (3, 4, 9) zwischen der Verbindungs-/Trennvorrichtung (4) und einem ersten der Bauten angebracht ist,
- eine gleiche Hydraulikzentrale (12), die sich auf dem zweiten der Schiffe befindet, die Verbindungs-/Trennvorrichtung (4) sowie die beiden Ventile (R1, R2, R3) versorgt,
- eine Hydraulikzentrale (11), die sich auf dem zweiten Bau befindet, eine Winde (6) zum Verbinden/Trennen versorgt, und
- das männliche Führungselement (20) von dem Anschlussstück, das sich auf der Seite des ersten der Bauten befindet, und das weibliche Führungselement (19) von dem Anschlussstück, das sich auf der Seite des zweiten der Bauten befindet, getragen ist.

2. Einrichtung nach Anspruch 1, **dadurch gekennzeichnet, dass** jede Betätigungswelle (33.1, 33.2) der Absperrventile (R1, R2), die sich am Ende eines jeden Anschlussstücks (41, 42) der Verbindungs-/Trennvorrichtung (4) befinden, durch ihr eigenes mechanisches Mittel (27, 28) betätigt wird, wobei diese mechanischen Mittel zum Betätigen der beiden Aktoren mechanisch gekoppelt sind und eines von ihnen über die von der Hydraulikzentrale (12) kommende Versorgung betätigt wird.

3. Einrichtung nach Anspruch 2, **dadurch gekennzeichnet, dass** jeder Aktor ein Ritzel (34.1, 34.2) umfasst, das mit einer Welle (33.1, 33.2) zum Drehantreiben der Drosselklappe des Ventils (R1, R2) fest verbunden ist, und jedes mechanische Mittel einen in das Ritzel (34.1, 34.2) eingreifenden Kolben-Zahnstange (27, 28) umfasst, wobei einer der Kolben-Zahnstangen über die Hydraulikzentrale (12) versorgt wird und mit dem anderen Kolben-Zahnstange in Kontakt ist, um seine Bewegung auf ihn zu übertragen.

4. Einrichtung nach Anspruch 3, **dadurch gekennzeichnet, dass** die beiden Kolben-Zahnstangen (27, 28) sich in einem zweiteiligen Gehäuse (29, 30) befinden, das bei einem Trennen zwischen den miteinander in Kontakt befindlichen Seiten der beiden Kolben-Zahnstangen entlang der Achse der Anschlussstücke (41, 42) getrennt werden kann.

5. Einrichtung nach einem der vorhergehenden Ansprüche, wobei die Hydraulikzentrale (12), welche die Verbindungs-/Trennvorrichtung (4) versorgt, sich auf dem Schiffsbau (1) befindet, **gekennzeichnet durch** eine Ankuppel-/Abkuppelvorrichtung (16) an der Hydraulikversorgung, die derart angebracht ist, dass sie bei der Betriebsverbindung ankuppelt und bei einem Lösen der Verbindungs-/Trennvorrichtung (4) **durch** die Wirkung der entlang ihrer Achse gerichteten Kraft, die zu derjenigen der Anschlussstücke parallel ist, ohne Verlust von Hydraulikfluid abkuppelt, was die Versorgung eines dritten Absperrventils (R3) ermöglicht.

6. Einrichtung nach einem der vorhergehenden Ansprüche, **dadurch gekennzeichnet, dass** sich die Ventile selbst bei einem Ausfall der von der Hydraulikzentrale (12) kommenden Versorgung, dank eines Hydraulikspeichers (35) oder einer mechanischen Rückstellfeder, die von dem Aktor getragen ist, der das an dem nicht hydraulisch versorgten Anschlussstück befindliche Ventil betätigt, schließen können.

7. Einrichtung nach einem der vorhergehenden Ansprüche, umfassend ein elektrisches Kabel oder Funkverbindungsmittel zwischen den Bauten.

## Claims

1. Installation for transferring fluid, comprising a pipeline (3, 4, 9) having an overhead flexible part (3), in the form of a catenary, which brings a sea-going structure (1) into communication with another structure (2), the pipeline (3) comprising the two nozzles (41, 42) of a connector/disconnector (4) which is provided with bringing-together and guide means (19 to 22) having a male element (20) and a female element (19) and combines, in a single interface, the normal-duty connecting/disconnecting device, commonly called the "QC/DC", and the emergency disconnecting device, commonly called the "ERS", which devices are actuated by a hydraulic station (12), each nozzle (41, 42) comprising, at its end, a valve (R1, R2) which is operated by an actuator,
**characterised in that**
- there is a single flange (10) which provides isolation from the electrical point of view and which is mounted on the pipeline (3, 4, 9) between the connector/disconnector (4) and a first of the structures;
- a single hydraulic station (12) located on the second of the structures feeds the connector/disconnector (4) and the two valves (R1, R2, R3);
- a hydraulic station (11) located on the second structure feeds a connecting/disconnecting winch (6); and
- the male guide element (20) is carried by the nozzle located on the side nearest the first of the structures, and the female guide element (19) is carried by the nozzle located on the side nearest the second of the structures.

2. Installation according to Claim 1, **characterised in that** each shaft (33.1, 33.2) for operating the isolating valves (R1, R2) situated at the end of each nozzle (41, 42) of the connector-disconnector (4) is actuated by its own mechanical means (27, 28), the said mechanical means for actuating the two actuators are coupled mechanically and one of them is actuated by the feed coming from the hydraulic station (12).

3. Installation according to Claim 2, **characterised in that** each actuator comprises a pinion (34.1, 34.2) which is integral with a shaft (33.1, 33.2) for driving the butterfly of the valve (R1, R2) in rotation, and each mechanical means comprises a rack-type piston (27, 28) meshing with the pinion (34.1, 34.2), one of said rack-type pistons being fed by the hydraulic station (12) and being in contact with the other rack-type piston, in such a way as to transfer its displacement to the latter.

4. Installation according to Claim 3, **characterised in that** the two rack-type pistons (27, 28) are in a housing in two parts (29, 30) which can be separated between those faces of the two rack-type pistons which are in contact with one another, along the axis of the nozzles (41, 42) when a disconnecting operation takes place.

5. Installation according to one of the preceding claims, wherein the hydraulic station (12) feeding the connector/disconnector (4) is on the sea-going structure (1), **characterised by** a coupler/decoupler (16) on the hydraulic feed, which is mounted in such a way as to be coupled, when the normal-duty connecting operation takes place, and to be uncoupled without loss of hydraulic fluid when a disconnection of the connector/disconnector (4) takes place, by the effect of the force directed along its axis, which is parallel to that of the nozzles, permitting the feeding of a third isolating valve (R3).

6. Installation according to one of the preceding claims, **characterised in that** the valves may be closed, even in the event of failure of the feed coming from the hydraulic station (12), by a hydraulic accumulator (35) or by a mechanical return spring carried by the actuator operating the valve situated on the nozzle which is not fed hydraulically.

7. Installation according to one of the preceding claims, comprising an electric cable or means of radio communication between the structures.
